# FASCICULE DE BREVET EUROPEEN

(11) **EP 2 293 388 B1**
(45) Date de publication et mention de la délivrance du brevet: **17.12.2014**
(21) Numéro de dépôt: 10172256.9
(22) Date de dépôt: 09.08.2010
(51) Int. Cl.: H01R 11/14, H02G 1/02

(54) **Dispositif pour mise à la terre d'un câble haute tension**
Vorrichtung zum Erden eines Hochspannungskabels
Device for earthing a high-voltage cable

(30) Priorité: 03.09.2009 FR 0956011
(43) Date de publication de la demande: 09.03.2011
(73) Titulaire: Société Anonyme des Ets. CATU, 92220 Bagneux (FR)
(72) Inventeur: Boulard, Hervé, 92222 Bagneux (FR); Margot, Sébastien, 93330 Neuilly-sur-Marne (FR)
(74) Mandataire: Santarelli

(56) Documents cités:
- FR-A1- 2 719 422

## Description

La présente invention concerne d'une manière générale les dispositifs pour mise à la terre des conducteurs ou câbles haute tension.

Plus particulièrement, la présente invention concerne les dispositifs pour mise à la terre présentant un étau destiné à être serré sur un conducteur de mise à la terre et une pince, reliée électriquement à l'étau, destinée à être connectée à un câble à haute tension.

Dans le domaine du transport d'électricité sur des lignes à haute tension, il est nécessaire d'assurer la sécurité des opérateurs intervenant sur les lignes et les ouvrages.

Plus particulièrement, lors d'interventions sur une portion de câble haute tension, il est nécessaire de mettre hors tension le câble en question puis de mettre en place sur ce câble une mise à la terre avant toute intervention, notamment pour prévenir les risques de retour intempestif de tension, l'induction magnétique en présence d'un autre ouvrage sous tension à proximité, le foudroiement, les charges piégées lors de la séparation du réseau, etc.

On connaît des dispositifs pour mise à la terre avec une pince destinée à être connectée au câble à haute tension et un étau relié électriquement à la pince et destiné à être serré sur un conducteur de mise à la terre.

En pratique, l'étau doit d'abord être mis à la terre en le serrant sur un conducteur lui-même relié à la terre, tel qu'un piquet, un poteau, une structure qui est déjà enterrée dans le sol. Ensuite, la pince, qui est reliée électriquement à l'étau, en général à l'aide d'un câble en cuivre ou aluminium cossé, est positionnée sur le conducteur haute tension, en s'assurant préalablement que celui-ci est hors tension.

La dépose du dispositif doit se faire en sens inverse, c'est-à-dire, d'abord dépose de la pince et ensuite dépose de l'étau.

Si l'opérateur met en oeuvre, c'est-à-dire pose ou dépose le système différemment, il risque de se faire électriser à cause du phénomène de couplage capacitif qui peut exister.

Le phénomène de couplage capacitif fait apparaître une tension électrique entre un conducteur électrique et les masses (mise à la terre) ou entre deux conducteurs électriques par la seule présence à proximité d'un ou plusieurs ouvrages sous tension nominale.

Tant qu'un ouvrage est séparé du réseau, par exemple pour une intervention, et que les ouvrages à proximité sont sous tension, le phénomène de couplage capacitif est permanent.

Lorsqu'un conducteur est soumis au phénomène de couplage capacitif, il se comporte comme un générateur de courant. Lorsqu'une mise à la terre est posée sur ce conducteur, il circule alors un courant permanent dans la mise à la terre.

C'est pourquoi, il est primordial lors de la pose d'une mise à la terre de poser d'abord l'étau sur un conducteur de mise à la terre puis de poser la pince sur le câble haute tension et de procéder en sens inverse lors de la dépose.

La demande de brevet français FR 2 719 422 propose un dispositif de mise à la terre comportant des moyens de raccordement de la pince sur l'extrémité d'une perche qui sont rendus solidaires de la perche à l'aide de moyens de liaison escamotables constituant, en outre, la clé de manoeuvre des moyens de serrage de l'étau.

Les dispositifs connus ne garantissent pas que l'ordre des étapes sera respecté par l'opérateur lors de la pose et la dépose, et ne garantissent donc pas sa sécurité par rapport aux conséquences éventuelles du phénomène de couplage capacitif exposé ci-dessus.

Le problème est donc de fournir un dispositif de mise à la terre qui permette de s'assurer que l'opérateur met en oeuvre le dispositif de mise à la terre dans l'ordre déterminé, tant au moment de la pose que de la dépose du dispositif.

L'invention propose à cet effet un dispositif pour mise à la terre d'un câble haute tension selon la revendication 1.

L'invention propose donc un dispositif qui empêche de désolidariser et donc de poser la pince sur le câble tant que l'étau n'a pas été serré, et empêche de desserrer l'étau tant que la pince n'a pas été déposée du câble.

Ainsi, avantageusement, l'invention permet de s'assurer que l'opérateur posera et déposera le dispositif de mise à la terre dans l'ordre correct, garantissant ainsi sa sécurité.

Avantageusement, le mécanisme d'interface présente des moyens de détrompage, de manière à autoriser la solidarisation de l'étau uniquement à la pince correspondante.

Ainsi, si un opérateur venait à déconnecter une pince incorrecte, il ne pourrait pas l'accoupler avec l'étau et ne pourrait donc pas desserrer celui-ci. Ceci contribue avantageusement à la sécurité du dispositif selon l'invention.

Selon des caractéristiques avantageuses, éventuellement combinées :
- l'élément de serrage pour serrer l'étau est une molette solidaire de la pince, de manière à ce que la molette reste solidaire de la pince lorsque la pince est désolidarisée de l'étau.
- l'étau comporte un mors fixe et un mors mobile, le mécanisme d'interface comportant sur le mors fixe, un verrou couplé à des éléments mobiles de l'étau et coopérant par interférence de formes avec la pince, de manière à ce que lorsque l'étau est serré, le déplacement de l'étau entraine un déplacement des éléments mobiles de manière à supprimer l'interférence de formes avec la pince, autorisant ainsi la désolidarisation de la pince depuis l'étau.
- les éléments mobiles sont des crochets montés à rotation sur l'étau et coopérant par interférences de formes avec une gorge pratiquée dans la pince, et le déplacement du verrou entraine une rotation des crochets de manière à ce qu'ils quittent la gorge.
- les moyens de détrompage consistent en un premier disque percé de trous et un second disque portant des pions aux endroits correspondants aux trous du premier disque, l'un des disques étant disposé sur l'étau et l'autre sur l'élément de serrage solidaire de la pince, de manière à ce que seule la pince correspondante puisse être accouplée avec l'étau.
- le disque porté par l'étau est monté libre en rotation par rapport à celui-ci et comporte des moyens de solidarisation avec des moyens de serrage mécaniques de l'étau, de manière à ce que la rotation du disque dans un sens entraîne le serrage de l'étau et la rotation dans le sens opposé, le déserrage.
- le dispositif comporte un capuchon de protection en matériau élastique destiné à être inséré dans la gorge du dispositif à la place de l'étau une fois celui-ci désolidarisé de la pince.

L'invention vise en outre, selon un autre aspect, un procédé de montage d'un dispositif tel que décrit ci-dessus, comportant les étapes consistant à :
- serrer l'étau sur un conducteur de mise à la terre de manière à actionner le mécanisme d'interface jusqu'à autoriser la désolidarisation de la pince depuis l'étau ;
- désolidariser la pince depuis l'étau,
- poser la pince sur un câble à haute tension et serrer la pince.

L'invention vise en outre, selon un autre aspect, un procédé de démontage d'un dispositif tel que décrit ci-dessus, comportant les étapes consistant à :
- desserrer et déposer la pince depuis le câble haute tension,
- présenter et solidariser la pince avec l'étau correspondant en accouplant ainsi l'élément de serrage de l'étau,
- desserrer l'étau au moyen de l'élément de serrage,
- déposer l'étau depuis le conducteur de mise à la terre.

L'exposé de l'invention sera maintenant poursuivi par la description détaillée d'un exemple de réalisation, donnée ci-après à titre illustratif et non limitatif, en référence aux dessins annexés. Sur ceux-ci :
- La figure 1 est une vue en coupe d'un dispositif selon l'invention en position de repos ;
- La figure 2 est un vue en coupe du même dispositif en position de service ;
- La figure 3 est une vue en perspective éclatée de l'étau du même dispositif ;
- La figure 4 est une vue en perspective éclatée d'une molette et d'un système de détrompage pour l'étau de ce même dispositif ;
- La figure 5 est une vue en perspective éclatée de l'étau de ce dispositif en position de service, et du disque de détrompage correspondant.
- La figure 6 est une vue en perspective éclatée d'un mode de réalisation alternatif d'une molette ;
- La figure 7 est une vue en perspective de l'étau correspondant à la molette de la figure 6.

Les repères numériques s'appliquent à l'ensemble des figures, pour des éléments identiques de deux variantes de réalisation d'un dispositif selon l'invention. Les repères numériques des pièces similaires du deuxième mode de réalisation présentant un "A" après le repère numérique repris du premier mode de réalisation.

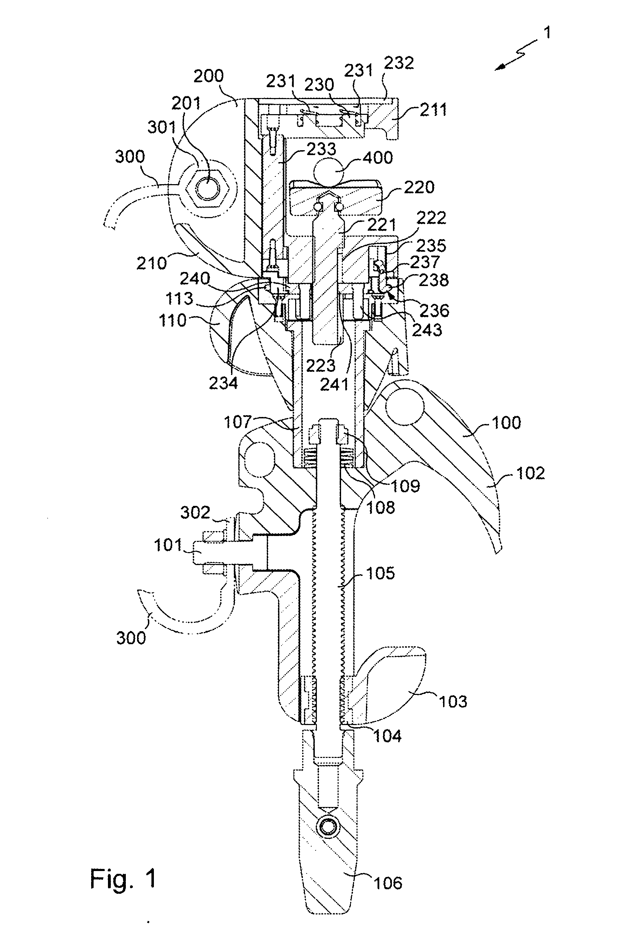

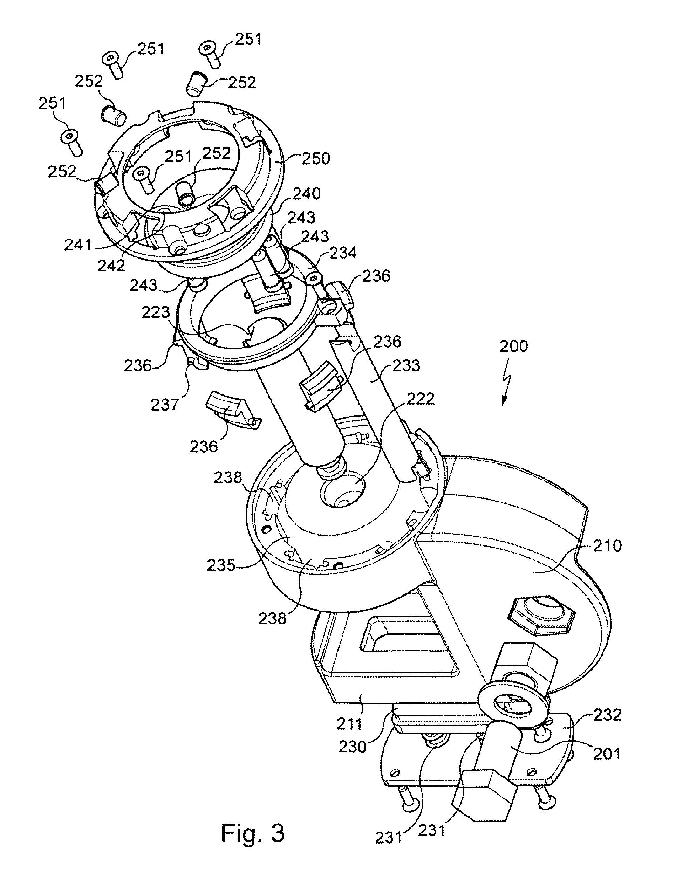

Comme visible en particulier sur les figures 1 à 3, un dispositif 1 pour mise à la terre d'un câble à haute tension selon l'invention comporte une pince 100 destinée à être connectée à un câble à haute tension (non représenté), et un étau 200 relié électriquement à la pince par l'intermédiaire d'un câble 300.

Le câble 300 présente, à chacune de ses extrémités, une cosse sertie 301, 302, chacune vissée respectivement sur des bornes 201 et 101 prévues à cet effet sur l'étau et la pince. Le câble est réalisé en cuivre ou en aluminium cossé. L'étau 200 est destiné à être serré sur un conducteur de mise à la terre 400. L'étau présente un corps 210 en forme de U dans lequel, un mors mobile 220 est monté à translation, de manière à venir serrer le câble 400 contre un mors fixe 211. Le mors mobile 220 est monté à rotation par rapport à un axe fileté 221, monté à liaison hélicoïdale dans un trou taraudé 222, pratiqué dans le corps de l'étau.

Le dispositif présente en outre un mécanisme d'interface entre la pince et l'étau. Il comprend un verrou 230 monté à translation dans le mors fixe 211 sur deux ressorts 231 qui viennent en appui sur une plaque de fermeture 232 vissée sur le corps de l'étau. Le verrou 230 est vissé sur un renvoi 233, qui traverse le corps de l'étau et se termine par un anneau 234 vissé sur le renvoi et qui vient se loger dans un lamage 235 du corps de l'étau prévue à cet effet. Dans ce lamage, sont disposés cinq crochets 236. Chacun d'entre eux présente deux ergots 237 formant axe de rotation, destinés à coopérer avec des creusures 238 prévues à cet effet dans le lamage 235. De cette manière, les crochets 236 sont montés à rotation par rapport à l'étau. Un disque cylindrique de détrompage 240 est monté dans le lamage 235, qui est fermé par une bague 250 de fermeture vissée par quatre vis 251 sur le corps 210 de l'étau. La bague 250 présente cinq évidements pour loger les parties supérieures des cinq crochets 236. Le disque 250 présente en outre des poussoirs à bille-ressort 252 insérés dans des ouvertures radiales du disque pour coopérer par interférence de formes avec la pince, contribuant ainsi à améliorer son maintien. L'axe d'étau 221 présente une rainure de clavette 223 qui coopère avec un ergot 241 prévu à cet effet dans l'alésage du disque de détrompage 240.

Le disque 240 présente une pluralité de trous 242 dans lesquels sont insérés des pions 243 évasés à leur base, de manière à se retrouver retenus par le disque contre le corps de l'étau, une fois le disque vissé sur celui-ci.

La pince 100 présente un mors fixe 102, destiné à accueillir un câble à haute tension non représenté et un mors mobile 103 destiné à enserrer le câble dans le mors fixe 102. Le mors 103 présente un trou taraudé 104, par lequel il est monté sur une tige filetée 105, mobile en rotation dans le corps de la pince 100, et pourvu à une extrémité d'un embout 106 de section hexagonale prévu pour s'engager avec une perche de serrage non représentée. A l'extrémité opposée à l'embout 106, une molette 110 est montée à rotation sur un tube 107 fixé par goupillage dans le corps de la pince 100.

La tige filetée 105 présente à son extrémité opposée à l'embout 106 un empilement de rondelles élastiques 108 et un écrou 109, qui permet de générer une force élastique de serrage lorsque le mors 103 enserre le câble à haute tension. A l'intérieur de la molette est monté un disque 111 retenu dans le corps de la molette à l'aide de vis 112.

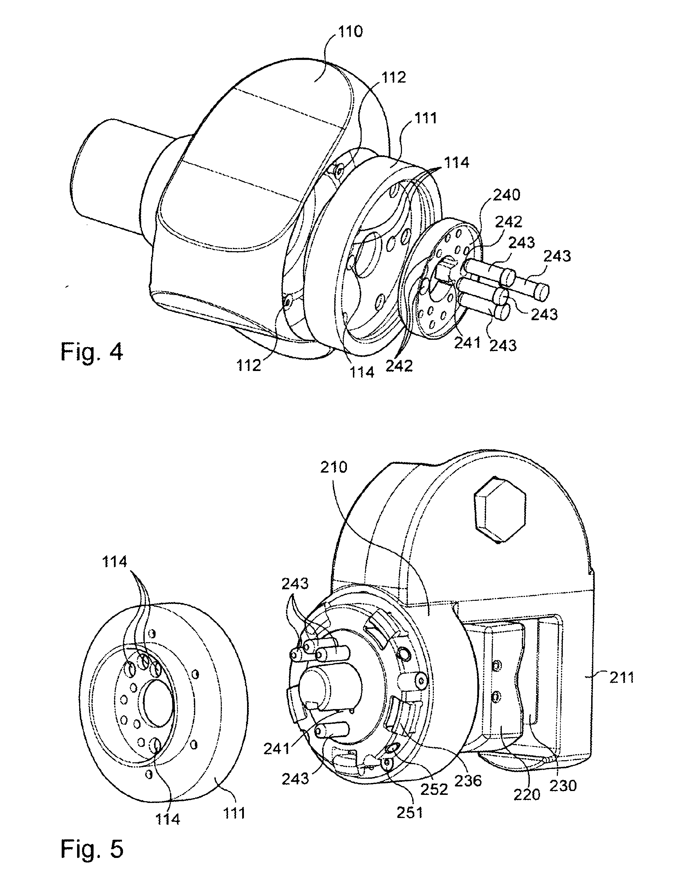

Le disque 111 présente une gorge 113, destinée à coopérer avec les extrémités des crochets 236 et des poussoirs à bille-ressort 252. Le disque 111 présente des ouvertures 114 correspondant au positionnement des pions 243 montés sur le disque 240 de l'étau. Cette correspondance entre les pions 243 et les ouvertures du disque 111 assurent la fonction de détrompage lors de l'accouplement de la pince sur l'étau. Ceci est plus particulièrement visible en figures 4 et 5.

Lorsqu'un opérateur souhaite installer le dispositif 1 pour mise à la terre, tel que décrit ci-dessus, le dispositif se trouve dans la configuration telle que visible en figure 1. L'étau 200 est alors accouplé à la pince 100, les extrémités des crochets 236 coopèrent par interférence de formes avec la gorge 113, empêchant ainsi la désolidarisation de la pince depuis l'étau. Lorsque l'étau 100 est mis en place sur un conducteur de mise à la terre 400, tel qu'un piquet, un poteau ou une structure déjà enterrée dans le sol, l'opérateur agit sur la molette 110 qui entraîne le disque 111, qui entraîne à son tour, via ses ouvertures, les pions 243 du disque 240. Les pions entraînent, quant à eux, le disque 240, qui entraine via son ergot 241, l'axe 221. Ce dernier tournant dans l'alésage 222, entraîne la translation du mors mobile 220 vers le mors fixe 211, enserrant ainsi le conducteur 400 contre le mors fixe.

Une fois que le conducteur 400 arrive au contact du verrou 230, l'opérateur continue à serrer la molette 110 et le serrage se fait alors à l'encontre des ressorts 231.

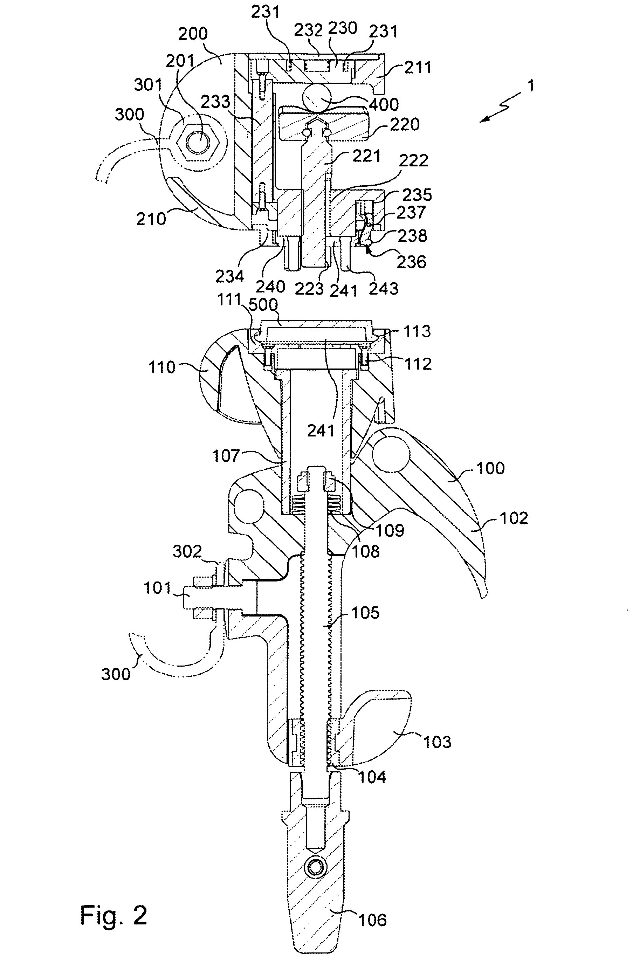

Le verrou 230 se déplace alors en butée contre le couvercle 232 et entraîne avec lui en translation le renvoi 233, ce qui entraîne l'anneau 234 qui s'éloigne alors de la pince 100. Dans ce mouvement de translation, l'anneau 234 entraîne les parties inférieures des crochets 236, qui pivotent alors autour de leurs axes 237, de manière à ce que leurs extrémités opposées se dégagent de la gorge 113, libérant ainsi la pince, comme visible en figure 2.

Le système de verrouillage avec le verrou 230 interdit le désaccouplement de l'étau et de la pince tant que l'étau n'a pas été suffisamment serré sur un conducteur de mise à la terre, garantissant ainsi un bon contact électrique entre l'étau et le conducteur de mise à la terre, et donc la sécurité de l'opérateur. C'est seulement une fois que l'étau est serré sur un conducteur que la pince est libérée et peut être posée sur un câble haute tension. De plus, la molette 110 restant solidaire de la pince, le mécanisme d'interface permet de s'assurer que, lorsque la pince est désolidarisée de l'étau, l'opérateur ne peut pas desserrer l'étau puisque l'élément de serrage de celui-ci, à savoir la molette 110, est désaccouplé de l'étau.

Une fois l'étau correctement serré autour d'un conducteur de mise à la terre, la pince est libérée et l'opérateur peut alors installer la pince sur un câble à haute tension à l'aide d'une perche non représentée, en serrant la pince sur le conducteur via l'embout 106. La connexion électrique entre la pince et l'étau est alors assurée via le câble 300.

Une fois la pince désolidarisée de l'étau, un capuchon 500 protecteur en matériau élastique, par exemple un élastomère, est inséré à la place de l'étau. Le capuchon présente un épaulement torique destiné à venir se loger dans la gorge 113 de la pince.

Lors de la dépose du dispositif, comme expliqué ci-dessus, l'opérateur ne peut pas desserrer l'étau tant que la pince n'a pas été remise en place sur celui-ci. L'opérateur est donc obligé de démonter dans un premier temps la pince du câble à haute tension, puis de la présenter sur l'étau après avoir retiré le capuchon 500. Ainsi, avantageusement, le dispositif permet de d'assurer que l'opérateur fera les opérations dans l'ordre prescrit pour assurer sa sécurité.

Le mécanisme de détrompage composé des disques 240 et 111 et des pions 243 permet de s'assurer que la pince correcte sera remise en place sur l'étau correspondant. En effet, la combinaison du positionnement des pions 243 et des trous dans le disque 111 empêche de repositionner une pince qui ne correspondrait pas à l'étau en question. En d'autres termes, ce dispositif de détrompage permet d'associer, de manière unique, une pince et un étau donnés, de sorte que pour un étau donné, une seule pince peut lui être accouplée. Le système de détrompage selon l'invention permet de réaliser plusieurs paires de pinces-étaux avec des combinaisons de pions et de trous correspondantes, de manière particulièrement simple et économique. De manière particulièrement avantageuse pour la sécurité de l'opérateur, l'étau ne peut pas être desserré si ce n'est pas la pince qui lui est associée de manière unique, qui est présentée pour y être accouplée.

Une fois que l'opérateur a démonté la pince du câble à haute tension et associé la pince correcte sur l'étau correspondant, le desserrage de l'étau devient possible par rotation de la molette 110, selon la même cinématique que décrite précédemment. Le mors mobile 220 recule alors depuis le mors fixe 211 et le verrou se déplace en position initiale grâce aux ressorts 231, ce qui déplace l'anneau 234 et repositionne les crochets 236 de manière à coopérer avec la gorge 113, interdisant ainsi le désaccouplement de la pince et de l'étau. Une fois le conducteur 400 libéré, le dispositif peut être démonté et rangé en attendant une nouvelle utilisation.

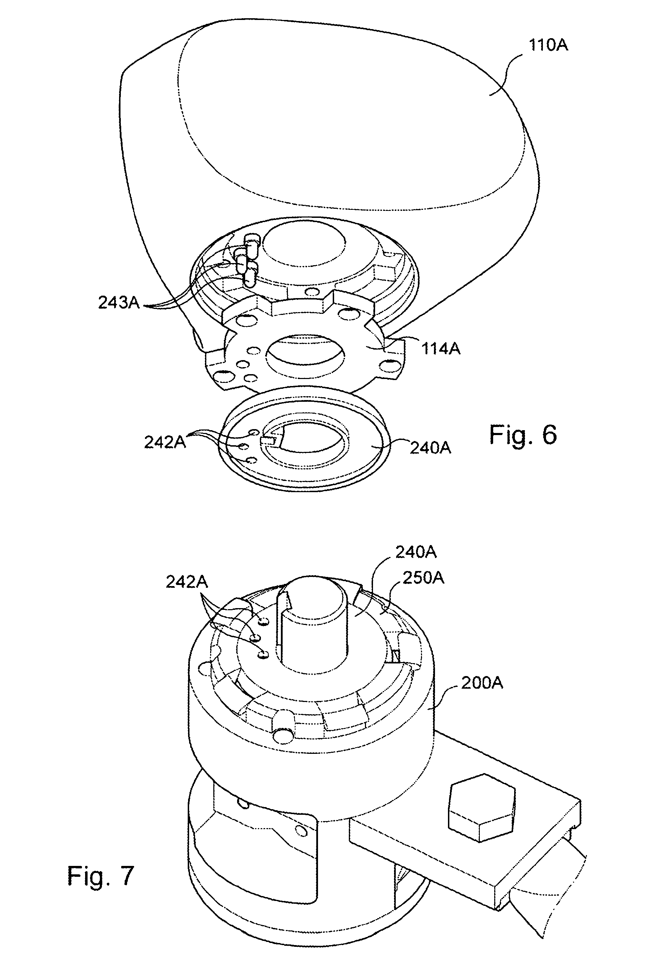

Dans la variante de réalisation des figures 6 et 7, la molette 110A présente un évidement en étoile dans lequel sont insérés des pions 243A, retenus par un disque 114A en forme d'étoile correspondant à l'évidement pratiqué dans la molette.

Les pions sont évasés à leur base et retenus par le disque lui-même retenu par des vis non représentées dans la molette.

Selon le même principe que décrit précédemment, un disque 240A est prévu sur l'étau 200A : le disque 240A est percé de trous 242A correspondant au positionnement des pions 243A assurant ainsi la fonction de détrompage.

L'étau 200A est similaire à l'étau décrit précédemment. Il comporte cinq crochets 236 retenus par une bague 250A vissée sur le corps de l'étau 200A et commandés par un mécanisme de verrou en tout point similaire à celui décrit ci-dessus.

La bague présente une forme intérieure conique facilitant la retenue du disque 240A lui-même de forme conique.

Les autres aspects de cette variante de réalisation étant en tout point similaires au mode de réalisation précédent, ne seront pas décrits plus en détails.

D'une manière générale, de nombreuses autres variantes sont possibles en fonction des circonstances, et l'on rappelle à cet égard que l'invention ne se limite pas aux exemples décrits et représentés.

## Revendications

1. Dispositif pour mise à la terre d'un câble haute tension comportant :
- une pince (100) destinée à être connectée à un câble à haute tension,
- un étau (200) relié électriquement à la pince et destiné à être serré sur un conducteur de mise à la terre, et
- un élément de serrage (110) pour serrer l'étau sur un conducteur de mise à la terre,
**caractérisé en ce qu'**il comporte en outre un mécanisme d'interface entre la pince (100) et l'étau (200) le mécanisme étant adapté à maintenir la pince et l'étau solidaires tant que l'étau n'est pas serré sur un conducteur (400) et, lorsque l'étau est serré sur un conducteur, à autoriser la désolidarisation de la pince depuis l'étau, et. lorsque la pince est désolidarisée de l'étau, à désaccoupler l'élément de serrage (110), empêchant ainsi de desserrer l'étau quand la pince n'est pas accouplée à l'étau.

2. Dispositif selon la revendication 2, **caractérisé en ce que** le mécanisme d'interface présente des moyens de détrompage (234, 114), de manière à autoriser la solidarisation de l'étau uniquement à la pince correspondante.

3. Dispositif selon la revendication 1 ou 2, **caractérisé en ce que** l'élément de serrage pour serrer l'étau est une molette (110) solidaire de la pince, de manière à ce que la molette reste solidaire de la pince lorsque la pince est désolidarisée de l'étau.

4. Dispositif selon l'une quelconque des revendications précédentes, **caractérisé en ce que** l'étau comporte un mors fixe (211) et un mors mobile (220), le mécanisme d'interface comportant sur le mors fixe, un verrou (230) couplé à des éléments mobiles (236) de l'étau et coopérant par interférence de formes avec la pince, de manière à ce que lorsque l'étau est serré, le déplacement de l'étau entraine un déplacement des éléments mobiles de manière à supprimer l'interférence de formes avec la pince, autorisant ainsi la désolidarisation de la pince depuis l'étau.

5. Dispositif selon la revendication 4, **caractérisé en ce que** les éléments mobiles (237) sont des crochets montés à rotation sur l'étau et coopérant par interférences de formes avec une gorge (113) pratiquée dans la pince, et **en ce que** le déplacement du verrou entraine une rotation des crochets de manière à ce qu'ils quittent la gorge.

6. Dispositif selon l'une des revendications 2 à 5, **caractérisé en ce que** les moyens de détrompage consistent en un premier disque (114, 240A) percé de trous et un second disque (240, 114A) portant des pions aux endroits correspondants aux trous du premier disque, l'un des disques étant disposé sur l'étau et l'autre sur l'élément de serrage solidaire de la pince, de manière à ce que seule la pince correspondante puisse être accouplée avec l'étau.

7. Dispositif selon la revendication 6, **caractérisé en ce que** le disque (240, 240A) porté par l'étau est monté libre en rotation par rapport à celui-ci et comporte des moyens de solidarisation (241) avec des moyens de serrage mécaniques (221) de l'étau, de manière à ce que la rotation du disque dans un sens entraîne le serrage de l'étau et la rotation dans le sens opposé, le déserrage.

8. Dispositif selon la revendication 5, **caractérisé en ce qu'**il comporte un capuchon de protection en matériau élastique destiné à être inséré dans la gorge (113) du dispositif à la place de l'étau une fois celui-ci désolidarisé de la pince.

9. Procédé de montage d'un dispositif selon la revendication 1, **caractérisé en ce qu'**il comporte les étapes consistant à :
- serrer l'étau (200) sur un conducteur de mise à la terre de manière à actionner le mécanisme d'interface jusqu'à autoriser la désolidarisation de la pince depuis l'étau ;
- désolidariser la pince (100) depuis l'étau,
- poser la pince sur un câble à haute tension et serrer la pince.

10. Procédé de démontage d'un dispositif selon la revendication 1, **caractérisé en ce qu'**il comporte les étapes consistant à :
- desserrer et déposer la pince (100) depuis le câble haute tension,
- présenter et solidariser la pince avec l'étau (200) correspondant en accouplant ainsi l'élément de serrage de l'étau,
- desserrer l'étau au moyen de l'élément de serrage,
- déposer l'étau depuis le conducteur de mise à la terre.

## Patentansprüche

1. Vorrichtung zur Erdung eines Hochspannungskabels, umfassend:
- eine Klemme (100), die dazu bestimmt ist, an ein Hochspannungskabel angeschlossen zu werden,
- eine Zwinge (200), die mit der Klemme elektrisch verbunden und dazu bestimmt ist, an einem Erdungsleiter festgezogen zu werden, und
- ein Spannelement (110), um die Zwinge an einem Erdungsleiter festzuziehen,
**dadurch gekennzeichnet, dass** sie ferner einen Schnittstellenmechanismus zwischen der Klemme (100) und der Zwinge (200) umfasst, wobei der Mechanismus dazu ausgelegt ist, die Klemme und die Zwinge fest verbunden zu halten, solange die Zwinge nicht an einem Leiter (400) festgezogen ist, und, wenn die Zwinge an einem Leiter festgezogen ist, das Trennen der Klemme von der Zwinge zuzulassen, und, wenn die Klemme von der Zwinge getrennt ist, das Spannelement (110) zu entkoppeln, wodurch verhindert wird, dass die Zwinge gelöst wird, wenn die Klemme nicht mit der Zwinge gekoppelt ist.

2. Vorrichtung nach Anspruch 1,
**dadurch gekennzeichnet, dass** der Schnittstellenmechanismus Vertauschsicherungsmittel (234, 114) umfasst, um das feste Verbinden der Zwinge lediglich mit der entsprechenden Klemme zuzulassen.

3. Vorrichtung nach Anspruch 1 oder 2,
**dadurch gekennzeichnet, dass** das Spannelement zum Festziehen der Zwinge ein mit der Klemme fest verbundenes Rändelrad (110) ist, so dass das Rändelrad mit der Klemme fest verbunden bleibt, wenn die Klemme von der Zwinge getrennt ist.

4. Vorrichtung nach einem der vorstehenden Ansprüche,
**dadurch gekennzeichnet, dass** die Zwinge eine feste Backe (211) und eine bewegliche Backe (220) umfasst, wobei der Schnittstellenmechanismus an der festen Backe einen Riegel (230) umfasst, der mit beweglichen Elementen (236) der Zwinge gekoppelt ist, die durch Formenüberlagerung mit der Klemme zusammenwirken, so dass dann, wenn die Zwinge festgezogen ist, die Bewegung der Zwinge zu einer Bewegung der beweglichen Elemente führt, um die Formenüberlagerung mit der Klemme aufzuheben, wodurch das Trennen der Klemme von der Zwinge zugelassen wird.

5. Vorrichtung nach Anspruch 4,
**dadurch gekennzeichnet, dass** die beweglichen Elemente (237) Haken sind, die an der Zwinge drehbar angebracht sind und durch Formenüberlagerung mit einer in der Klemme ausgebildeten Auskehlung (113) zusammenwirken, und dass die Bewegung des Riegels zu einer Drehung der Haken führt, so dass sie die Auskehlung verlassen.

6. Vorrichtung nach einem der Ansprüche 2 bis 5,
**dadurch gekennzeichnet, dass** die Vertauschsicherungsmittel aus einer ersten Scheibe (114, 240A), welche von Löchern durchbohrt ist, und einer zweiten Scheibe (240, 114A), welche an den den Löchern der ersten Scheibe entsprechenden Stellen Stifte trägt, bestehen, wobei eine der Scheiben an der Zwinge und die andere an dem mit der Klemme fest verbundenen Spannelement angeordnet ist, so dass lediglich die entsprechende Klemme mit der Zwinge gekoppelt werden kann.

7. Vorrichtung nach Anspruch 6,
**dadurch gekennzeichnet, dass** die von der Zwinge getragene Scheibe (240, 240A) dieser gegenüber frei drehbar angebracht ist und Mittel zum festen Verbinden (241) mit mechanischen Spannmitteln (221) der Zwinge umfasst, so dass die Drehung der Scheibe in eine Richtung zum Festziehen der Zwinge und die Drehung in die entgegengesetzte Richtung zum Lösen führt.

8. Vorrichtung nach Anspruch 5,
**dadurch gekennzeichnet, dass** sie eine Schutzkappe aus elastischem Material umfasst, die dazu bestimmt ist, in die Auskehlung (113) der Vorrichtung anstelle der Zwinge eingesetzt zu werden, sobald diese von der Klemme getrennt ist.

9. Verfahren zur Montage einer Vorrichtung nach Anspruch 1,
**dadurch gekennzeichnet, dass** es die Schritte umfasst, die darin bestehen:
- die Zwinge (200) an einem Erdungsleiter festzuziehen, um den Schnittstellenmechanismus zu betätigen, bis das Trennen der Klemme von der Zwinge zugelassen wird;
- die Klemme (100) von der Zwinge zu trennen,
- die Klemme an ein Hochspannungskabel anzulegen und die Klemme festzuziehen.

10. Verfahren zur Demontage einer Vorrichtung nach Anspruch 1,
**dadurch gekennzeichnet, dass** es die Schritte umfasst, die darin bestehen:
- die Klemme (100) zu lösen und von dem Hochspannungskabel abzunehmen,
- die Klemme bereitzuhalten und mit der entsprechenden Zwinge (200) fest zu verbinden, wodurch das Spannelement der Zwinge gekoppelt wird,
- die Zwinge mittels des Spannelements zu lösen,
- die Zwinge von dem Erdungsleiter abzunehmen.

## Claims

1. Device for earthing a high voltage cable comprising:
- a clamp (100) adapted to be connected to a high voltage cable,
- a vise (200) electrically connected to the clamp and adapted to be tightened on an earthing conductor, and
- a tightening member (110) for tightening the vise on an earthing conductor,
**characterized in that** it further comprises an interface mechanism between the clamp (100) and the vise (200), the mechanism being adapted to hold the clamp and vise attached together while the vise is not tightened on a conductor (400), and, when the vise is tightened on a conductor, to enable the detaching of the clamp from the vise, and, when the clamp has been detached from the vise, to decouple the tightening member (110), so preventing the vise from being released when the clamp is not coupled to the vise.

2. A device according to claim 2, **characterized in that** the interface mechanism has fool-proofing means (234, 114), so as to enable the attachment of the vise solely to the corresponding clamp.

3. A device according to claim 1 or 2, **characterized in that** the tightening member for tightening the vise is a manipulating wheel (110) attached to the clamp, such that the manipulating wheel remains attached to the clamp when the clamp is detached from the vise.

4. A device according to any one of the preceding claims, **characterized in that** the vise comprises a fixed jaw (211) and a movable jaw (220), the interface mechanism comprising on the fixed jaw, a lock (230) coupled with movable members (236) of the vise and cooperating with the clamp by form interference, such that when the vise is tightened, the movement of the vise drives a movement of the movable members so as to eliminate the form interference with the clamp, so enabling the detachment of the clamp from the vise.

5. A device according to claim 4, **characterized in that** the movable members (237) are hooks rotatably mounted on the vise and cooperating by form interference with a groove (113) formed in the clamp, and **in that** the moving of the lock drives a rotation of the hooks such that they leave the groove.

6. A device according to one of claims 2 to 5, **characterized in that** the fool-proofing means consist of a first disc (114, 240A) bored with holes and a second disc (240, 114A) bearing pins at the locations corresponding to the holes of the first disc, one of the discs being disposed on the vise and the other on the tightening member attached to the clamp, such that only the corresponding clamp can be coupled with the vise.

7. A device according to claim 6, **characterized in that** the disc (240, 240A) carried by the vise is mounted to rotate freely relative to the latter and comprises means for attachment (241) to mechanical tightening means (221) of the vise, such that the rotation of the disc in one direction drives the tightening of the vise and the rotation in the opposite direction drives the releasing.

8. A device according to claim 5, **characterized in that** it comprises a protective cap of elastic material adapted to be inserted into the groove (113) of the device instead of the vise once the latter has been detached from the clamp.

9. A method of mounting a device according to claim 1, **characterized in that** it comprises the steps of:
- tightening the vise (200) on an earthing conductor so as to actuate the interface mechanism until the detachment of the clamp from the vise is enabled;
- detaching the clamp (100) from the vise.
- placing the clamp on a high-voltage cable and engaging the clamp.

10. A method of demounting a device according to claim 1, **characterized in that** it comprises the steps of:
- disengaging and removing the clamp (100) from the high-voltage cable,
- presenting and attaching together the clamp and the corresponding vise (200) thereby coupling the tightening member of the vise,
- releasing the vise by means of the tightening member,
- removing the vise from the earthing conductor.
